(19) Europäisches Patentamt / European Patent Office / Office européen des brevets

(11) **EP 4 375 875 A1**

(12) **EUROPEAN PATENT APPLICATION**
published in accordance with Art. 153(4) EPC

(43) Date of publication:
**29.05.2024 Bulletin 2024/22**

(21) Application number: **21951390.0**

(22) Date of filing: **30.07.2021**

(51) International Patent Classification (IPC):
**G06N 3/04** (2023.01)    **G06N 3/063** (2023.01)

(52) Cooperative Patent Classification (CPC):
**G06N 3/04; G06N 3/063**

(86) International application number:
**PCT/CN2021/109848**

(87) International publication number:
**WO 2023/004800 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **LIU, Genshu**
  **Shenzhen, Guangdong 518129 (CN)**
• **XIAO, Yannan**
  **Shenzhen, Guangdong 518129 (CN)**
• **ZHANG, Yihao**
  **Shenzhen, Guangdong 518129 (CN)**
• **ZUO, Wenming**
  **Shenzhen, Guangdong 518129 (CN)**
• **ZHOU, Yucong**
  **Shenzhen, Guangdong 518129 (CN)**
• **ZHONG, Zhao**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **NEURAL NETWORK POST-PROCESSING METHOD AND APPARATUS, CHIP, ELECTRONIC DEVICE, AND STORAGE MEDIUM**

(57)    Embodiments of this application provide a neural-network post-processing method, and relate to the field of artificial intelligence. In response to a received convolution result of a neural network layer, an address entry that matches the neural network layer is looked up in a pre-constructed lookup table based on channel information of the neural network layer; an activation and quantization parameter corresponding to the convolution result is selected from the matched address entry; and then an activation and quantization value corresponding to the convolution result is obtained through calculation based on the convolution result and the selected activation and quantization parameter. This application further provides a neural-network post-processing apparatus, a chip, an electronic device, and a computer-readable storage medium. In this application, activation and quantization are integrated, so that an expression capability and adaptability of a neural network model can be enhanced, and computing power costs can be reduced.

FIG. 3

**Description**

**TECHNICAL FIELD**

This application relates to the field of neural network technologies, and specifically, to a neural-network post-processing method and apparatus, a chip, an electronic device, and a computer-readable storage medium that are for integrating activation and quantization.

**BACKGROUND**

A deep learning (Deep Learning) technology is widely used in the field of image processing thanks to a powerful feature learning capability and non-linear mapping capability. An image processing model constructed based on a deep convolutional neural network (Deep Convolutional Neural Network, DCNN) especially develops rapidly. Accelerating an operation of a convolutional neural network by using a method that is based on an application-specific integrated circuit is a current research hotspot. In the field of terminal chips especially, due to limitations of an area, power consumption, and the like, how to cost-effectively and efficiently deploy hardware in a network having a good image processing effect is a major challenge for current academic research and engineering implementation.

Activation and quantization are a quite important link in neural-network post-processing. Introduction of non-linear activation in a neural network is mainly to add a non-linear characteristic to the network. Mathematically, the neural network is a multilayer composite function. If a linear activation function is used, the linear activation function is still linear after a multilayer composite. In this case, a quantity of layers in the neural network is meaningless. If a non-linear activation function is used, the activation function introduces a non-linear factor to a neuron, so that the neural network can arbitrarily approach any non-linear function, and an expression capability of a model is increased. In this way, the neural network can be applied to numerous non-linear models, and a complex problem can be resolved.

However, an activation manner of the non-linear activation function used in existing neural-network post-processing is fixed, and the non-linear activation function cannot adaptively vary with the model or a task processing scenario. The model has a week expression capability and poor adaptability. In addition, the activation and the quantization are separately arranged, and circuit implementation costs in the neural-network post-processing are high.

**SUMMARY**

In view of the foregoing content, it is necessary to provide a neural-network post-processing method and apparatus, a chip, a computer device, and a computer-readable storage medium, so that activation and quantization can be integrated, and adaptability is strong.

A first aspect of embodiments of this application discloses a neural-network post-processing method, including: constructing a lookup table, where the lookup table includes a plurality of address entries, and each address entry stores a plurality of activation and quantization parameters of one neural network layer in a neural network; in response to a received convolution result of a neural network layer, looking, based on channel information of the neural network layer, up an address entry that matches the neural network layer; selecting, from the matched address entry, an activation and quantization parameter corresponding to the convolution result; and obtaining, through calculation based on the convolution result and the selected activation and quantization parameter, an activation and quantization value corresponding to the convolution result.

This technical solution is used to integrate activation and quantization of the neural network, so that activation and quantization functions can be integrated when area overheads of a chip are low, an area and power consumption of the chip can be reduced, and hardware deployment inside the chip can be more convenient.

In a possible implementation, each address entry further stores channel information of the corresponding neural network layer, and the determining, based on channel information of the neural network layer, an address entry that matches the neural network layer includes: looking, in the lookup table based on the channel information of the neural network layer, up the address entry that matches the neural network layer.

This technical solution is used to correspondingly set, for each neural network layer, one address entry that stores the channel information of the neural network layer, so that the address entry that matches the neural network layer can be looked up in the lookup table based on the channel information of the neural network layer.

In a possible implementation, an intelligent activation function is pre-trained in the neural network, the intelligent activation function includes N linear functions having uniform segments and N+1 segment left-boundary numbers, the plurality of activation and quantization parameters of the neural network layer include a first activation and quantization parameter, and N+1 second activation and quantization parameters and N+1 third activation and quantization parameters that correspond to the N+1 segment left-boundary numbers, and the selecting, from the matched address entry, an activation and quantization parameter corresponding to the convolution result includes: determining a first segment left-boundary number that is in the N+1 segment left-boundary numbers and that corresponds to the convolution result; and selecting, from the matched address entry, the first activation and quantization parameter, a second activation and quantization parameter corresponding to the first segment left-boundary number, and a third activation and quantization parameter corresponding to the first segment left-boundary number.

This technical solution is used, so that a corresponding intelligent activation function can be obtained through training based on an actual service processing scenario, a corresponding activation and quantization parameter can be selected based on a segment left-boundary number corresponding to the convolution result, and adaptive activation of the convolution result can be implemented by using the intelligent activation function.

In a possible implementation, the determining a first segment left-boundary number that is in the N+1 segment left-boundary numbers and that corresponds to the convolution result includes: determining, based on a Clamp function and a shifting algorithm, the first segment left-boundary number that is in the N+1 segment left-boundary numbers and that corresponds to the convolution result.

In a possible implementation, an intelligent activation function is pre-trained in the neural network, the intelligent activation function includes N piecewise linear functions having uniform segments and N+1 segment right-boundary numbers, the plurality of activation and quantization parameters of the neural network layer include a first activation and quantization parameter, and N+1 second activation and quantization parameters and N+1 third activation and quantization parameters that correspond to the N+1 segment right-boundary numbers, and the selecting, from the matched address entry, an activation and quantization parameter corresponding to the convolution result includes: determining a first segment right-boundary number that is in the N+1 segment right-boundary numbers and that corresponds to the convolution result; and selecting, from the matched address entry, the first activation and quantization parameter, a second activation and quantization parameter corresponding to the first segment right-boundary number, and a third activation and quantization parameter corresponding to the first segment right-boundary number.

In a possible implementation, the determining a first segment left-boundary number that is in the N+1 segment right-boundary numbers and that corresponds to the convolution result includes: determining, based on a Clamp function and a shifting algorithm, the first segment right-boundary number that is in the N+1 segment right-boundary numbers and that corresponds to the convolution result.

In a possible implementation, the obtaining, through calculation based on the convolution result and the selected activation and quantization parameter, an activation and quantization value corresponding to the convolution result includes: obtaining, through calculation based on the convolution result, the selected first activation and quantization parameter, the selected second activation and quantization parameter, and the selected third activation and quantization parameter, the activation and quantization value corresponding to the convolution result, where a calculation expression of the activation and quantization value is: $z_i=(x-Bias)*Scale+Offset$, where the parameter $z_i$ is the activation and quantization value, the parameter x is the convolution result, the parameter Bias is the selected first activation and quantization parameter, the parameter Scale is the selected second activation and quantization parameter, and the parameter Offset is the selected third activation and quantization parameter.

This technical solution is used, so that the activation and quantization value of the convolution result can be obtained through calculation based on the convolution result, the selected first activation and quantization parameter, the selected second activation and quantization parameter, and the selected third activation and quantization parameter, and a good service processing effect can be achieved when computing power is reduced.

In a possible implementation, the neural-network post-processing method further includes: performing pooling processing on the activation and quantization value, and outputting a pooling result.

A second aspect of embodiments of this application discloses a neural-network post-processing apparatus, including a lookup table, where the lookup table includes a plurality of address entries, and each address entry stores a plurality of activation and quantization parameters of one neural network layer in a neural network; and the neural-network post-processing apparatus further includes: a lookup unit, configured to look, based on channel information of a first neural network layer in the neural network, up an address entry that matches the first neural network layer, where the lookup unit is further configured to select, from the matched address entry, an activation and quantization parameter corresponding to a convolution result of the neural network layer; and a calculation unit, configured to obtain, through calculation based on the convolution result and the selected activation and quantization parameter, an activation and quantization value corresponding to the convolution result.

This technical solution is used to integrate activation and quantization of the neural network, so that activation and quantization functions can be integrated when area overheads of a chip are low, an area and power consumption of the chip can be reduced, and hardware deployment inside the chip can be more convenient.

In a possible implementation, each address entry further stores channel information of the corresponding neural network layer, and the lookup unit is configured to look, in the lookup table based on the channel information of the first neural network layer, up the address entry that matches the first neural network layer.

This technical solution is used to correspondingly set, for each neural network layer, one address entry that stores the channel information of the neural network layer, so that the address entry that matches the neural network layer can be looked up in the lookup table based on the channel information of the neural network layer.

In a possible implementation, an intelligent activation function is pre-trained in the neural network, the intelligent activation function includes N piecewise linear functions having uniform segments and N+1 segment left-boundary numbers, the plurality of activation and quantization parameters of each neural network layer include a first activation and quantization parameter, and N+1 second activation and quantization parameters and N+1 third activation and quantization parameters that correspond to the N+1 segment left-boundary numbers, and the lookup unit is configured to determine a first segment left-boundary number that is in the N+1 segment left-boundary numbers and that corresponds to the convolution result, and select, from the matched address entry, the first activation and quantization parameter, a second activation and quantization parameter corresponding to the first segment left-boundary number, and a third activation and quantization parameter corresponding to the first segment left-boundary number.

This technical solution is used, so that a corresponding intelligent activation function can be obtained through training based on an actual service processing scenario, a corresponding activation and quantization parameter can be selected based on a segment left-boundary number corresponding to the convolution result, and adaptive activation of the convolution result can be implemented by using the intelligent activation function.

In a possible implementation, an intelligent activation function is pre-trained in the neural network, the intelligent activation function includes N piecewise linear functions having uniform segments and N+1 segment right-boundary numbers, the plurality of activation and quantization parameters of each neural network layer include a first activation and quantization parameter, and N+1 second activation and quantization parameters and N+1 third activation and quantization parameters that correspond to the N+1 segment right-boundary numbers, and the lookup unit is configured to determine a first segment right-boundary number that is in the N+1 segment right-boundary numbers and that corresponds to the convolution result, and select, from the matched address entry, the first activation and quantization parameter, a second activation and quantization parameter corresponding to the first segment right-boundary number, and a third activation and quantization parameter corresponding to the first segment right-boundary number.

In a possible implementation, the calculation unit includes a subtractor, a multiplier, and a summator, and a calculation expression of the activation and quantization value is: $z_i=(x-Bias)* Scale+Offset$, where the parameter $z_i$ is the activation and quantization value, the parameter x is the convolution result, the parameter Bias is the selected first activation and quantization parameter, the parameter Scale is the selected second activation and quantization parameter, and the parameter Offset is the selected third activation and quantization parameter.

This technical solution is used, so that the activation and quantization value of the convolution result can be obtained through calculation based on the convolution result, the selected first activation and quantization parameter, the selected second activation and quantization parameter, and the selected third activation and quantization parameter, and a good service processing effect can be achieved when computing power is reduced.

In a possible implementation, the neural-network post-processing apparatus further includes a precision transformation unit, and the precision transformation unit is configured to perform precision transformation on a value of the expression (x-Bias), to enable a data type of the value of the expression (x-Bias) to be the same as a data type of the parameter Scale.

In a possible implementation, the neural-network post-processing apparatus further includes a first saturation operation unit, and the first saturation operation unit is configured to perform a saturation operation on a value of the expression (x-Bias)* Scale.

In a possible implementation, the first saturation operation unit is further configured to perform precision transformation on the value of the expression (x-Bias)* Scale, to enable a data type of the value of the expression (x-Bias)* Scale to be the same as a data type of the parameter Offset.

In a possible implementation, the neural-network post-processing apparatus further includes a second saturation operation unit, and the second saturation operation unit is configured to perform a saturation operation on a value of the parameter $z_i$.

This technical solution is used, so that the value of the parameter $z_i$ can satisfy an input requirement of a pooling layer.

According to a third aspect, an embodiment of this application provides a computer-readable storage medium, including computer instructions. When the computer instructions are run on an electronic device, the electronic device is enabled to perform the neural-network post-processing method according to the first aspect.

According to a fourth aspect, an embodiment of this application provides an electronic device. The electronic device includes a processor and a memory. The memory is configured to store instructions. The processor is configured to invoke the instructions in the memory, to enable the electronic device to perform the neural-network post-processing method according to the first aspect.

According to a fifth aspect, an embodiment of this application provides a computer program product. When the computer program product is run on a computer, the computer is enabled to perform the neural-network post-processing method according to the first aspect.

According to a sixth aspect, an embodiment of this application provides an apparatus. The apparatus has a function of implementing behavior of an electronic device in the method according to the first aspect. The function may be implemented by using hardware, or may be implemented by hardware executing corresponding software. The hardware or the software includes one or more modules corresponding to the foregoing function.

It may be understood that the computer-readable storage medium according to the third aspect, the electronic device according to the fourth aspect, the computer program product according to the fifth aspect, and the apparatus according to the sixth aspect all correspond to the method according to the first aspect. Therefore, for beneficial effects that can be achieved by the computer-readable storage medium, the electronic device, the computer program product, and the apparatus, refer to the beneficial effects in the corresponding method provided above. Details are not described herein again.

## BRIEF DESCRIPTION OF DRAWINGS

FIG. 1 is a schematic diagram of an application scenario of a neural-network post-processing method according to an embodiment of this application;

FIG. 2 is a schematic diagram of segmentation of an intelligent activation function according to an embodiment of this application;

FIG. 3 is a schematic diagram of a structure of an activation and quantization module according to an embodiment of this application;

FIG. 4 is a schematic flowchart of a neural-network post-processing method according to an embodiment of this application;

FIG. 5 is a schematic diagram of function modules of a neural-network post-processing apparatus according to an embodiment of this application; and

FIG. 6 is a schematic diagram of a structure of a possible electronic device according to an embodiment of this application.

## DESCRIPTION OF EMBODIMENTS

To more clearly understand the objectives, features, and advantages of this application, the following describes this application in detail with reference to the accompanying drawings and specific embodiments. It should be noted that embodiments in this application and the features in embodiments may be mutually combined in a case of no conflict.

It should be noted that, in this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In the specification, claims, and accompanying drawings of this application, the terms "first", "second", "third", "fourth", and the like (if existent) are intended to distinguish between similar objects but do not indicate a specific order or sequence.

A neural network is an operation model, and includes a large quantity of nodes (which is also referred to as neurons) connected to each other. Each node represents a specific output function that is referred to as an activation function (activation function). A connection between every two nodes represents a weighted value, referred to as a weight, for a signal passing through the connection. A network output varies with a network connection manner, the weighting value, and the activation function. A convolutional neural network is used as an example. A process in which a feature map (FeatureMap) of an int8 type is processed by a layer of network may be: performing convolution, activation, quantization, and pooling processing on FeatureMap, and outputting new FeatureMap of the int8 type.

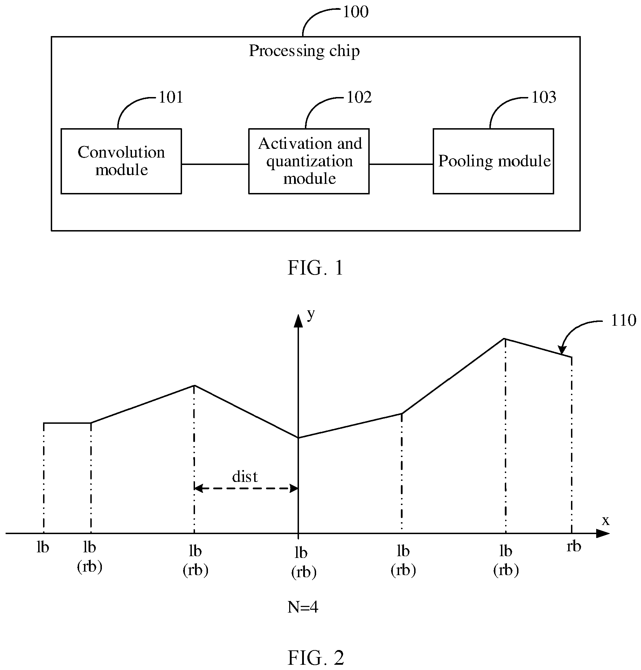

With reference to FIG. 1, the following describes an example of a diagram of an application scenario of a neural-network post-processing method provided in embodiments of this application.

A processing chip 100 may be applied to fields such as language recognition, image recognition, computer vision, adaptive control, and device fault detection. The processing chip 100 may include a convolution module 101 configured to perform convolution processing on FeatureMap, an activation and quantization module 102 configured to perform activation and quantization processing on a convolution result, and a pooling module 103 configured to perform pooling processing on a quantization result.

The convolution module 101 may be an existing module that can implement a convolution function, and the pooling module 103 may be an existing module that can implement a pooling function. The activation and quantization module 102 includes an adaptive intelligent activation function. The processing chip 100 uses the intelligent activation function to replace a conventional activation function. The intelligent activation function may adaptively vary with a model or a processing service scenario, and has strong adaptability. For example, the intelligent activation function may replace a rectified linear unit (Rectified Linear Unit, ReLU), a parametric rectified linear unit (Parametric Rectified Linear Unit, PRelu), a Sigmoid function, a Tanh function, or the like, to map an input of a neuron to an output end. The processing chip 100 may further integrate an intelligent activation process and a quantization process, to enhance an expression capability and an adaptation capability of the model.

In some embodiments, only the activation and quantization module 102 may alternatively be encapsulated into the processing chip 100, so that the processing chip 100 executes an activation and quantization function in neural-network post-processing.

As shown in FIG. 2, an intelligent activation function 110 may be a piecewise linear function, and the intelligent activation function 110 may be obtained through pre-training in an end-to-end manner. Intelligent activation functions 110 of different shapes may be obtained through training based on different service scenarios, and the intelligent activation functions 110 may be obtained through training by using an existing training algorithm or means, so that a good service (for example, image) processing effect can still be achieved when computing power of a chip is reduced, or a better service processing effect can be achieved in a case of same computing power. Likewise, the intelligent activation functions 110 of the different shapes may also be trained to adapt to different neural network models. The intelligent activation function 110 obtained through training may be pre-stored in the processing chip 100 or a neural-network post-processing chip.

In some embodiments, uniform segmentation may be performed on the intelligent activation function 110 in an X-axis direction, and the intelligent activation function 110 may be divided into a plurality of piecewise linear functions having uniform segments (where FIG. 2 shows that the intelligent activation function 110 is divided into four piecewise linear functions having uniform segments, a quantity is not limited to four in this application, and the quantity may be greater than or less than four). The intelligent activation function 110 may include a plurality of parameters N, lb, rb, dist, x, y. The parameter N is a segment quantity of the intelligent activation function 110. A larger value of N indicates higher manufacturing costs of the chip, more complex data processing, and higher precision. Neural network layers in the neural network may use a same segment quantity, or may use different segment quantities. The parameter lb is a left boundary of the piecewise linear function. The parameter rb is a right boundary of the piecewise linear function. The parameter dist is an intra-segment interval of the piecewise linear function. The parameter x is the convolution result of the convolution module 101. The parameter y is an activation result of the intelligent activation function 110.

For example, the intelligent activation function 110 shown in FIG. 2 is divided into the four linear functions having the uniform segments, there may be six segment left-boundary numbers, and there may also be six right-boundary numbers.

The convolution result x of the convolution module 101 is input to the intelligent activation function 110. The intelligent activation function 110 may perform adaptive activation on the convolution result x, and output the activation result (the parameter y) corresponding to the convolution result. A process in which the intelligent activation function 110 activates the parameter x to obtain the parameter y may include:

(a1) Determine a left-boundary number $id_x$ of a segment in which the parameter x is located, where a maximum value of $id_x$ is N+1, a minimum value of $id_x$ is 0, and $id_x$ may be obtained through calculation by using the following expression (i):

$$id_x = Clamp[\lfloor (x-lb)/dist \rfloor + 1] \ldots (i).$$

(a2) Restrict the parameter dist to a $d^{th}$ power of 2 (where d is an integer), where division calculation may be replaced with shifting calculation, to improve hardware implementation friendliness. That is, the expression (i) may be converted into the expression (ii):

$$id_x = Clamp[\lfloor (x-lb) \gg d \rfloor + 1] \ldots (ii).$$

(a3) Set a left endpoint of the piecewise linear function to $B[id_x]$, set a function value corresponding to the left endpoint to $P[id_x]$, and set a slope of the piecewise linear function f1 to $K[id_x]$. The parameter y may be obtained through calculation by using the following expression (iii):

$$y = P[id_x] + K[id_x] * (x - B[id_x]) \ldots (iii).$$

In some embodiments, a right-boundary number of a segment in which the parameter x is located may also be determined with reference to the foregoing steps a1 to a3, to obtain the parameter y based on the right-boundary number.

In some embodiments, a weight of a network at a layer in the neural network is set to w, and a process in which the network at the layer performs activation and quantization processing on an input feature map f and outputs an activation and quantization value zi may include:

(b 1) Quantize the feature map f (for example, a 32-bit floating-point number) to obtain a first quantization result $f_1$ (for example, an 8-bit signed integer), where $f_1=(f-\beta)/S_f$; and quantize the weight w (for example, a 32-bit floating-point number) to obtain a second quantization result wi (for example, an 8-bit signed integer), where $w_1=w/S_w$. $\beta$ is a first preset offset, $S_f$ is a preset quantization scale of the parameter f, and $S_w$ is a preset quantization scale of the weight w. The convolution result $x=f_1*w_1$.

(b2) Perform dequantization processing on the first quantization result $f_1$ to obtain a first dequantization result $f_2$, where $f_2=f_1*S_f+\beta$; and perform dequantization processing on the second quantization result wi to obtain a second dequantization result $w_2$, where $w_2=w_1*S_w$.

(b3) Obtain the activation result y through calculation based on the first dequantization result $f_2$ and the second dequantization result $w_2$, where $y=f_2*w_2+b\_s$, and the parameter $b\_s$ is a preset offset.

(b4) Obtain the activation and quantization value zi through calculation based on an expression (iv), where

$$z_1=[(y-B_i)*K_i+P_i-\gamma]/S_z \quad \dots \text{(iv)}.$$

$z=(y-B_i)*K_i+P_i$, i is a left-boundary number of a segment in which the parameter x is located, a left endpoint of the piecewise linear function is Bi, a function value corresponding to the left endpoint is Pi, a slope of the piecewise linear function is $K_i$, and $S_z$ is a quantization scale of the parameter z.

In some embodiments, the expressions $y=f_2*w_2+b\_s$, $w_2=w_1*S_w$, and $f_2=f_1*S_f+\beta$ are substituted into the expression (iv) to obtain the expression (v):

$$z_1=[(f_1*w_1*S_f*S_w+\beta*w_1*S_w+b\_s-B_i)*K_i+P_i-\gamma]/S_z$$
$$=[f_1*w_1-(L_B-\beta*w_1*S_w-b\_s)/(S_f*S_w)]*(S_f*S_w*K_i/S_z)+[(L_B-B_i)*K_i+P_i-\gamma]/S_z \quad \dots \text{(v)}.$$

The parameter $L_B$ is a second preset offset. The expression $(L_B - \beta*w_1*S_w-b\_s)/(S_f*S_w)$ may be defined as a parameter Bias, the expression $S_f*S_w*K_i/S_z$ may be defined as a parameter Scale, the expression $[(L_B-B_i)*K_i+P_{i-\gamma}]/S_z$, may be defined as a parameter Offset, and fi*wi is the convolution result x. In this case, the expression (v) may be transformed into the following form:

$$z_1=(x-\text{Bias})*\text{Scale}+\text{Offset}.$$

For the parameter Bias, because values of $L_B$, $b\_s$, $\beta$, $w_1$, and $S_w$ do not vary, the parameter Bias is a fixed value. For the parameter Scale, values of $S_w$, $S_f$, and $S_z$ do not vary. One segment left-boundary number i corresponds to one slope $K_i$. However, a leftmost segment left-boundary number in FIG. 2 does not belong to the linear functions having the uniform segments, and may be ignored. That is, N+1 segment left-boundary numbers (excluding the leftmost segment left-boundary number) included in the intelligent activation function 110 may correspond to N+1 parameters Scale. For the parameter Offset, values of $b\_s$, $\gamma$, and $S_z$ do not vary. One left-boundary number i corresponds to one left endpoint $B_i$, one slope $K_i$, and one function value $P_i$. That is, the N+1 segment left-boundary numbers included in the intelligent activation function 110 may also correspond to N+1 parameters Offset.

In some embodiments, offline calculation may be performed on values of the parameter Bias, the parameter Scale, and the parameter Offset in advance, and a calculation result is stored in a lookup table (Lookup Table, LUT) for ease of query, so that a hardware circuit performs lookup in the LUT to obtain the activation and quantization value zi through calculation based on the convolution result x.

It may be understood that, for one neural network layer, the parameter d and the parameter Bias are fixed, and N piecewise linear functions having uniform segments correspond to the N+1 parameters Offset and the N+1 parameters Scale. That is, the neural network layer may correspond to one parameter d, one parameter Bias, the N+1 parameters Offset, and the N+1 parameters Scale.

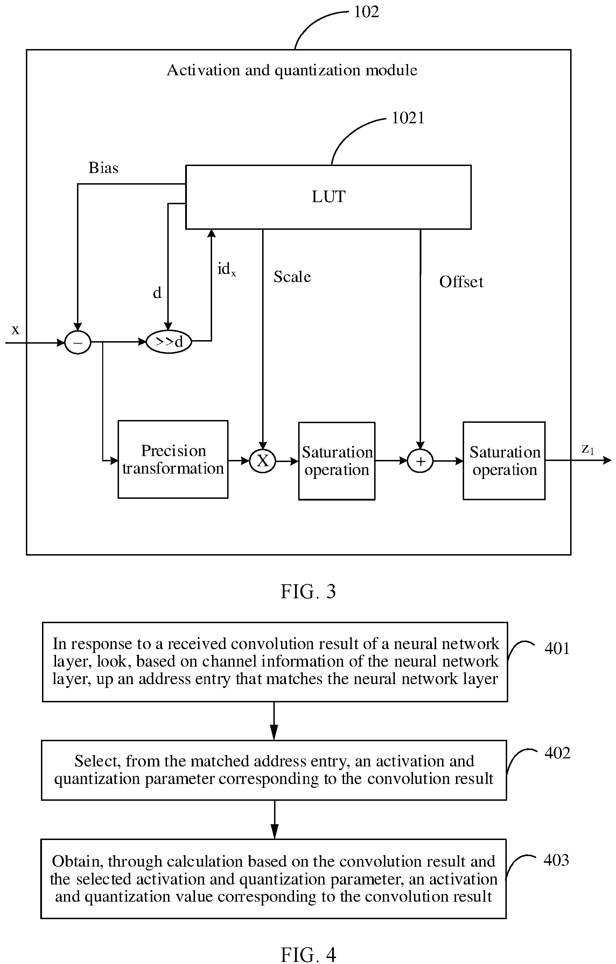

With reference to FIG. 3, the following describes an example of a schematic diagram of a circuit architecture of the activation and quantization module 102 provided in embodiments of this application.

The circuit architecture of the activation and quantization module 102 shown in FIG. 3 is obtained based on the expression (v). The activation and quantization module 102 includes a LUT 1021. Each address entry in the LUT 1021 may store parameter data of one channel (channel). A quantity of address entries in the LUT 1021 may be the same as a channel quantity of the neural network. A size of the LUT 1021 is related to the channel quantity of the neural network, the segment quantity of the intelligent activation function 110, a bit width of the parameter d, a bit width of the parameter Bias, a bit width of the parameter Offset, and a bit width of the parameter Scale. Compared with a storage increment part of each channel in an existing lookup table in the neural network, a storage increment part of each channel in the LUT 1021 includes only a parameter d, N+1 parameters Scale, and N+1 parameters Offset that are stored on the channel, so that activation and quantization resource sharing can be implemented to a maximum extent. Assuming that the neural network includes M channels and that the LUT 1021 includes M address entries, bit widths of content stored in the LUT 1021 are shown in the following Table 1:

**Table 1**

| Address entry in a LUT | Catalogue content in the LUT | | | |
|---|---|---|---|---|
| Address 0: channel 0 | d [7:0] | Bias [23:0] | Offset [15:0][N:0] | Scale [15:0][N:0] |
| Address 1: channel 1 | d [7:0] | Bias [23:0] | Offset [15:0][N:0] | Scale [15:0][N:0] |
| Address 2: channel 2 | d [7:0] | Bias [23:0] | Offset [15:0][N:0] | Scale [15:0][N:0] |
| Address 3: channel 3 | d [7:0] | Bias [23:0] | Offset [15:0][N:0] | Scale [15:0][N:0] |
| ... | | | | |
| Address M-3: channel M-3 | d [7:0] | Bias [23:0] | Offset [15:0][N:0] | Scale [15:0][N:0] |
| Address M-2: channel M-2 | d [7:0] | Bias [23:0] | Offset [15:0][N:0] | Scale [15:0][N:0] |
| Address M-1: channel M-1 | d [7:0] | Bias [23:0] | Offset [15:0][N:0] | Scale [15:0][N:0] |

In Table 1 above, each address entry may correspond to one parameter d (8 bits), one parameter Bias (24 bits), N+1 parameters Offset (16 bits), and N+1 parameters Scale (16 bits). Because the parameter d and the parameter Bias do not vary with the piecewise linear function, the parameter d and the parameter Bias may be defined as parameters unrelated to the piecewise linear function. Because the parameter Offset and the parameter Scale vary with the piecewise linear function, the parameter Offset and the parameter Scale may be defined as parameters related to the piecewise linear function.

In some embodiments, bit widths of the parameters d, the parameters Bias, the parameters Offset, and the parameters Scale in Table 1 above are examples, and construct no limitation. The bit widths of the parameters d, the parameters Bias, the parameters Offset, and the parameters Scale may all be set or adjusted based on an actual application requirement.

In some embodiments, an input of the activation and quantization module 102 includes a convolution result x of a current neural network layer, and an output of the activation and quantization module 102 is zi. A calculation manner in which the activation and quantization module 102 obtains zi through calculation based on input x may include the following steps.

31: Perform a subtraction operation on the parameter x and a parameter Bias, where the parameter Bias may be looked up in the LUT 1021.

In some embodiments, each neural network layer in the neural network may correspond to one channel, and an address entry corresponding to the current neural network layer may be determined based on a channel of the neural network layer. For example, the channel of the current neural network layer is the channel 2, and that the address entry corresponding to the current neural network layer is the address 2 may be determined through lookup in the LUT 1021. Then, the subtraction operation may be performed on the parameter x and the parameter Bias that corresponds to the address 2.

In some embodiments, a subtractor may be used to perform the subtraction operation on the parameter x and the parameter Bias.

32: Perform precision transformation on a subtraction operation result in step 32.

In some embodiments, the convolution result is of a fixed-point type. That is, the parameter x is data of the fixed-point type. The parameter Scale is data of a floating-point type. The performing precision transformation on a subtraction operation result in step 32 is converting the subtraction operation result of the fixed-point type into a floating-point type, to perform a floating-point multiplication operation with the parameter Scale.

33: Perform a multiplication operation on a precision transformation result in step 32 and the parameter Scale.

In some embodiments, the parameter Scale may be looked up in the LUT 1021, and a lookup manner of the parameter Scale may include: (c1) determining, based on the channel of the current neural network layer, the address entry that is in the LUT 1021 and that corresponds to the current neural network layer, where for example, the address entry corresponding to the current neural network layer is the address 2, the address 2 corresponds to N+1 parameters Scale, and the N+1 parameters Scale may be numbered $id_0$ to $id_N$; and (c2) determining, based on the parameter d in the address 2 and the expression (ii), the left-boundary number $id_x$ of the segment in which the parameter x is located, and then selecting a target parameter Scale from the N+1 parameters Scale based on the segment left-boundary number $id_x$, where for example, it is determined that the segment left-boundary number $id_x$ is $id_2$, that is, a parameter Scale numbered $id_2$ is selected from the N+1 parameters Scale, and the multiplication operation is performed on the precision transformation result in step 33 and the parameter Scale numbered $id_2$.

In some embodiments, a multiplier may be used to perform the multiplication operation on the precision transformation result in step 32 and the parameter Scale.

34: Perform a first saturation operation on a multiplication result in step 33.

In some embodiments, the multiplication result in step 33 is data of the floating-point type, and the parameter Offset is data of the fixed-point type. The first saturation operation includes converting the multiplication result in step 33 into the fixed-point type and performing a saturation operation. The saturation operation is as follows: When an operation result is greater than an upper limit value or less than a lower limit value, a saturation operation result is equal to the upper limit value or the lower limit value.

35: Perform an addition operation on a result of the first saturation operation in step 34 and the parameter Offset.

In some embodiments, the parameter Offset may be looked up in the LUT 1021, and a lookup manner of the parameter Offset is basically the same as the lookup manner of the parameter Scale. The lookup manner of the parameter Offset may include: (d1) determining, based on the channel of the current neural network layer, the address entry that is in the LUT 1021 and that corresponds to the current neural network layer, where for example, the address entry corresponding to the current neural network layer is the address 2, the address 2 corresponds to N+1 parameters Offset, and the N+1 parameters Offset may be numbered $id_0$ to $id_N$; and (d2) determining, based on the parameter d in the address 2 and the expression (ii), the left-boundary number $id_x$ of the segment in which the parameter x is located, and then selecting a target parameter Offset from the N+1 parameters Offset based on the segment left-boundary number $id_x$, where for example, it is determined that the segment left-boundary number $id_x$ is $id_2$, that is, a parameter Offset numbered $id_2$ is selected from the N+1 parameters Offset, and the addition operation is performed on the result of the first saturation operation in step 34 and the parameter Offset numbered $id_2$.

In some embodiments, a summator may be used to perform the addition operation on the result of the first saturation operation in step 34 and the parameter Offset.

36: Perform a second saturation operation on an addition operation result in step 35.

In some embodiments, the addition operation result in step 35 needs to be transferred to the pooling module 103 for pooling processing. To enable the addition operation result in step 35 to satisfy an input precision requirement of the pooling module 103, the second saturation operation is performed on the addition operation result in step 35. The second saturation operation is as follows: When an operation result is greater than an upper limit value or less than a lower limit value, a saturation operation result is equal to the upper limit value or the lower limit value.

The activation and quantization module integrates an activation circuit and a quantization circuit, so that the activation and quantization functions can be integrated when area overheads of the chip are low, an area and power consumption of the chip can be reduced, and hardware deployment can be more convenient. In addition, a segment quantity of the intelligent activation function may be flexibly set, tradeoff setting may be performed based on an actual service processing scenario, flexibility of activation and quantization can be improved. The boundary number $id_x$ is calculated through shifting calculation, so that the hardware implementation friendliness can be improved.

FIG. 4 shows a neural-network post-processing method according to an embodiment of this application. The method is applied to a processing chip 100. The processing chip 100 includes a LUT 1021. In this embodiment, the neural-network post-processing method includes the following steps.

400: Construct a lookup table.

In some embodiments, the lookup table includes a plurality of address entries, each address entry stores a plurality of activation and quantization parameters of one neural network layer in a neural network, and the address entry may further store channel information of the corresponding neural network layer. The neural network may be a convolutional neural network or another type of neural network.

401: In response to a received convolution result of a neural network layer, look, based on channel information of the neural network layer, up an address entry that matches the neural network layer.

In some embodiments, the convolution result may be obtained by performing a convolution operation on a feature map and a weight. For example, the feature map may be quantized by using a preset first quantization scale, to obtain a first quantization result; the weight may be quantized by using a preset second quantization scale, to obtain a second quantization result; and then the first quantization result and the second quantization result are convolved to obtain the convolution result. A value of the first quantization scale and a value of the second quantization scale may be set based on an actual service processing requirement, and the value of the first quantization scale may be the same as or different from the value of the second quantization scale.

402: Select, from the matched address entry, an activation and quantization parameter corresponding to the convolution result.

In some embodiments, the activation and quantization parameter corresponding to the convolution result may include a first activation and quantization parameter (a parameter Bias), a second activation and quantization parameter (a parameter Scale), and a third activation and quantization parameter (a parameter Offset). The address entry corresponding to the neural network layer may be first looked up in the LUT 1021 based on the channel information of the neural network layer. Each address entry in the lookup table corresponds to one parameter d, one parameter Bias, $N+1$ parameters Offset, and $N+1$ parameters Scale. When the corresponding address entry is determined, a parameter Bias that matches the convolution result may be obtained, and then a segment left-boundary number $id_x$ corresponding to the convolution result is determined based on a parameter d in the address entry and an expression (ii), so that the parameter Scale and the parameter Offset that correspond to the current convolution result can be looked up in the current address entry based on the segment left-boundary number $id_x$.

403: Obtain, through calculation based on the convolution result and the selected activation and quantization parameter, an activation and quantization value corresponding to the convolution result.

In some embodiments, a calculation expression of the activation and quantization value of the convolution result is: $z_1=(x-Bias)*Scale+Offset$, where zi is the activation and quantization value, x is the convolution result, Bias is the selected first activation and quantization parameter, Scale is the selected second activation and quantization parameter, and Offset is the selected third activation and quantization parameter.

In some embodiments, when the activation and quantization value corresponding to the convolution result is obtained through calculation, the activation and quantization value may be transferred to a pooling module 103 for pooling processing.

In the foregoing neural-network post-processing method, activation and quantization are integrated, so that activation and quantization functions are integrated when area overheads of a chip are low, and an area and power consumption of the chip can be reduced.

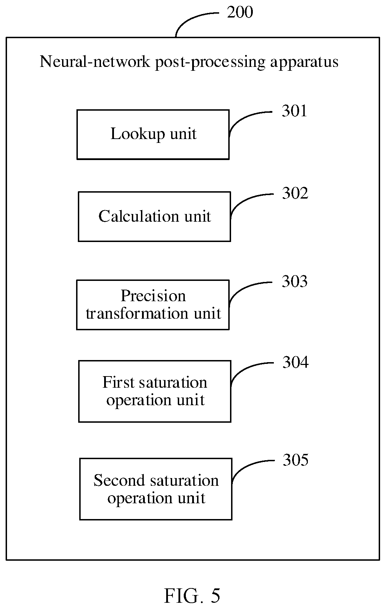

FIG. 5 is a schematic diagram of function modules of a neural-network post-processing apparatus 200 disclosed in an embodiment of this application. As shown in FIG. 5, the neural-network post-processing apparatus 200 may include a lookup unit 301, a calculation unit 302, a precision transformation unit 303, a first saturation operation unit 304, and a second saturation operation unit 305. The unit in this embodiment of the present invention may be a program segment for completing a specific function, and is more suitable for describing an execution process of software in a processor than a program. The one or more units may be stored in a memory and configured to be executed by one or more processors.

The lookup unit 301 is configured to look, based on channel information of a first neural network layer, up an address entry that matches the first neural network layer, and select, from the matched address entry, an activation and quantization parameter corresponding to a convolution result.

The calculation unit 302 is configured to obtain, through calculation based on the convolution result and the selected activation and quantization parameter, an activation and quantization value corresponding to the convolution result.

In some embodiments, the calculation unit 302 may include a subtractor, a multiplier, and a summator, and a calculation expression of the activation and quantization value is: $zi=(x-Bias)*Scale+Offset$, where the parameter zi is the activation and quantization value, the parameter x is the convolution result, the parameter Bias is a selected first activation and quantization parameter, the parameter Scale is a selected second activation and quantization parameter, and the parameter Offset is a selected third activation and quantization parameter.

The precision transformation unit 303 is configured to perform precision transformation on a value of the expression (x-Bias), to enable a data type of the value of the expression (x-Bias) to be the same as a data type of the parameter Scale.

The first saturation operation unit 304 is configured to perform a saturation operation on a value of the expression (x-Bias)*Scale.

In some embodiments, the first saturation operation unit 304 is further configured to perform precision transformation on the value of the expression (x-Bias)*Scale, to enable a data type of the value of the expression (x-Bias)*Scale to be the same as a data type of the parameter Offset.

The second saturation operation unit 305 is configured to perform a saturation operation on a value of the parameter zi.

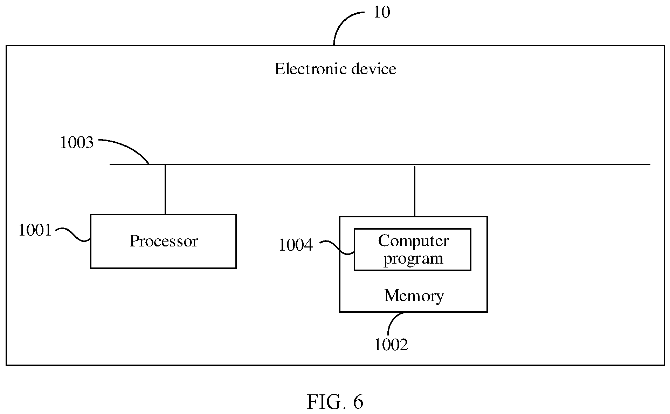

FIG. 6 is a schematic diagram of a hardware structure of an electronic device 10 according to an embodiment of this application. The electronic device 10 may include a processor 1001, a memory 1002, and a communication bus 1003. The memory 1002 is configured to store one or more computer programs 1004. The one or more computer programs 1004 are configured to be executed by the processor 1001. The one or more computer programs 1004 include instructions, and the instructions may be for implementing performing of the neural-network post-processing method according to 4 in the electronic device 10.

It may be understood that the structure shown in this embodiment does not constitute a specific limitation on the electronic device 10. In some other embodiments, the electronic device 10 may include more or fewer components than those shown in the figure, combine some components, split some components, or have different component arrangements.

The processor 1001 may include one or more processing units. For example, the processor 1001 may include an application processor (application processor, AP), a modem, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 1001, and is configured to store instructions and data. In some embodiments, the memory in the processor 1001 is a cache. The memory may store instructions or data that the processor 1001 has just used or cyclically uses. If the processor 1001 needs to use the instructions or the data again, the processor 1001 may directly invoke the instructions or the data from the memory. This avoids repeated access, reduces waiting time of the processor 1001, and therefore improves system efficiency.

In some embodiments, the processor 1001 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

In some embodiments, the memory 1002 may include a high-speed random access memory, and may further include a nonvolatile memory, for example, a hard disk, a primary storage, a plug-connected hard disk, a smart media card (Smart Media Card, SMC), a secure digital (Secure Digital, SD) card, a flash card (Flash Card), at least one magnetic disk storage device, a flash device, or another volatile solid-state storage device.

Embodiments further provide a computer storage medium. The computer storage medium stores computer instructions. When the computer instructions are run on an electronic device, the electronic device is enabled to perform the foregoing related method steps, to implement the neural-network post-processing method in the foregoing embodiment.

Embodiments further provide a computer program product. When the computer program product is run on a computer, the computer is enabled to perform the foregoing related steps, to implement the neural-network post-processing method in the foregoing embodiment.

In addition, an embodiment of this application further provides an apparatus. The apparatus may be specifically a chip, a component, or a module. The apparatus may include a processor and a memory that are connected. The memory is configured to store computer-executable instructions. When the apparatus is run, the processor may execute the computer-executable instructions stored in the memory, to enable the chip to perform the neural-network post-processing method in the foregoing method embodiment.

A first electronic device, a second electronic device, the computer storage medium, the computer program product, or the chip provided in embodiments is configured to perform a corresponding method provided above. Therefore, for beneficial effects that can be achieved by the first electronic device, the second electronic device, the computer storage medium, the computer program product, or the chip, refer to the beneficial effects of the corresponding method provided above. Details are not described herein again.

Based on the foregoing descriptions of the implementations, a person skilled in the art may clearly understand that, for the purpose of convenient and brief description, only division into the foregoing function modules is used as an example for description. During actual application, the foregoing functions may be allocated to different function modules for implementation based on a requirement. That is, an inner structure of an apparatus is divided into different function modules, to implement all or some of the foregoing functions.

In the several embodiments provided in this application, it should be understood that the disclosed apparatus and method may be implemented in other manners. For example, the foregoing apparatus embodiment is an example. For example, division into the modules or units is logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate. A part displayed as a unit may be one or more physical units, that is, may be located in one place, or may be distributed in a plurality of different places.

Some or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods in embodiments of this application. The foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement within the technical scope disclosed in this application shall fall within the protection scope of this application.

**Claims**

1. A neural-network post-processing method, wherein the method comprises:

    constructing a lookup table, wherein the lookup table comprises a plurality of address entries, and each address entry stores a plurality of activation and quantization parameters of one neural network layer in a neural network;
    in response to a received convolution result of a neural network layer, looking, based on channel information of the neural network layer, up an address entry that matches the neural network layer;
    selecting, from the matched address entry, an activation and quantization parameter corresponding to the convolution result; and
    obtaining, through calculation based on the convolution result and the selected activation and quantization parameter, an activation and quantization value corresponding to the convolution result.

2. The neural-network post-processing method according to claim 1, wherein each address entry further stores channel information of the corresponding neural network layer, and the determining, based on channel information of the neural network layer, an address entry that matches the neural network layer comprises:
looking, in the lookup table based on the channel information of the neural network layer, up the address entry that matches the neural network layer.

3. The neural-network post-processing method according to claim 1 or 2, wherein an intelligent activation function is pre-trained in the neural network, the intelligent activation function comprises N piecewise linear functions having uniform segments and N+1 segment left-boundary numbers, the plurality of activation and quantization parameters of the neural network layer comprise a first activation and quantization parameter, and N+1 second activation and quantization parameters and N+1 third activation and quantization parameters that correspond to the N+1 segment left-boundary numbers, and the selecting, from the matched address entry, an activation and quantization parameter corresponding to the convolution result comprises:

    determining a first segment left-boundary number that is in the N+1 segment left-boundary numbers and that corresponds to the convolution result; and
    selecting, from the matched address entry, the first activation and quantization parameter, a second activation and quantization parameter corresponding to the first segment left-boundary number, and a third activation and quantization parameter corresponding to the first segment left-boundary number.

4. The neural-network post-processing method according to claim 3, wherein the determining a first segment left-boundary number that is in the N+1 segment left-boundary numbers and that corresponds to the convolution result comprises:
determining, based on a Clamp function and a shifting algorithm, the first segment left-boundary number that is in the N+1 segment left-boundary numbers and that corresponds to the convolution result.

5. The neural-network post-processing method according to claim 1 or 2, wherein an intelligent activation function is pre-trained in the neural network, the intelligent activation function comprises N piecewise linear functions having uniform segments and N+1 segment right-boundary numbers, the plurality of activation and quantization parameters of the neural network layer comprise a first activation and quantization parameter, and N+1 second activation and quantization parameters and N+1 third activation and quantization parameters that correspond to the N+1 segment right-boundary numbers, and the selecting, from the matched address entry, an activation and quantization parameter corresponding to the convolution result comprises:

   determining a first segment right-boundary number that is in the N+1 segment right-boundary numbers and that corresponds to the convolution result; and
   selecting, from the matched address entry, the first activation and quantization parameter, a second activation and quantization parameter corresponding to the first segment right-boundary number, and a third activation and quantization parameter corresponding to the first segment right-boundary number.

6. The neural-network post-processing method according to claim 5, wherein the determining a first segment left-boundary number that is in the N+1 segment right-boundary numbers and that corresponds to the convolution result comprises:
   determining, based on a Clamp function and a shifting algorithm, the first segment right-boundary number that is in the N+1 segment right-boundary numbers and that corresponds to the convolution result.

7. The neural-network post-processing method according to any one of claims 3 to 6, wherein the obtaining, through calculation based on the convolution result and the selected activation and quantization parameter, an activation and quantization value corresponding to the convolution result comprises:

   obtaining, through calculation based on the convolution result, the selected first activation and quantization parameter, the selected second activation and quantization parameter, and the selected third activation and quantization parameter, the activation and quantization value corresponding to the convolution result, wherein a calculation expression of the activation and quantization value is: $z_i=(x-Bias)*Scale+Offset$, wherein the parameter $z_i$ is the activation and quantization value, the parameter x is the convolution result, the parameter Bias is the selected first activation and quantization parameter, the parameter Scale is the selected second activation and quantization parameter, and the parameter Offset is the selected third activation and quantization parameter.

8. The neural-network post-processing method according to any one of claims 1 to 7, wherein the method further comprises:
   performing pooling processing on the activation and quantization value, and outputting a pooling result.

9. A neural-network post-processing apparatus, comprising a lookup table, wherein the lookup table comprises a plurality of address entries, and each address entry stores a plurality of activation and quantization parameters of one neural network layer in a neural network; and the neural-network post-processing apparatus further comprises:

   a lookup unit, configured to look, based on channel information of a first neural network layer in the neural network, up an address entry that matches the first neural network layer, wherein
   the lookup unit is further configured to select, from the matched address entry, an activation and quantization parameter corresponding to a convolution result of the neural network layer; and
   a calculation unit, configured to obtain, through calculation based on the convolution result and the selected activation and quantization parameter, an activation and quantization value corresponding to the convolution result.

10. The neural-network post-processing apparatus according to claim 9, wherein each address entry further stores channel information of the corresponding neural network layer, and the lookup unit is configured to look, in the lookup table based on the channel information of the first neural network layer, up the address entry that matches the first neural network layer.

11. The neural-network post-processing apparatus according to claim 9 or 10, wherein an intelligent activation function is pre-trained in the neural network, the intelligent activation function comprises N piecewise linear functions having uniform segments and N+1 segment left-boundary numbers, the plurality of activation and quantization parameters of each neural network layer comprise a first activation and quantization parameter, and N+1 second activation and quantization parameters and N+1 third activation and quantization parameters that correspond to the N+1 segment left-boundary numbers, and the lookup unit is configured to determine a first segment left-boundary number that is in the N+1 segment left-boundary numbers and that corresponds to the convolution result, and select, from the matched address entry, the first activation and quantization parameter, a second activation and quantization parameter corresponding to the first segment left-boundary number, and a third activation and quantization parameter corresponding to the first segment left-boundary number.

12. The neural-network post-processing apparatus according to claim 9 or 10, wherein an intelligent activation function is pre-trained in the neural network, the intelligent activation function comprises N piecewise linear functions having uniform segments and N+1 segment right-boundary numbers, the plurality of activation and quantization parameters of each neural network layer comprise a first activation and quantization parameter, and N+1 second activation and quantization parameters and N+1 third activation and quantization parameters that correspond to the N+1 segment right-boundary numbers, and the lookup unit is configured to determine a first segment right-boundary number that is in the N+1 segment right-boundary numbers and that corresponds to the convolution result, and select, from the matched address entry, the first activation and quantization parameter, a second activation and quantization parameter corresponding to the first segment right-boundary number, and a third activation and quantization parameter corresponding to the first segment right-boundary number.

13. The neural-network post-processing apparatus according to claim 11 or 12, wherein the calculation unit comprises a subtractor, a multiplier, and a summator, and a calculation expression of the activation and quantization value is: $z_1 =(x-Bias)*Scale+Offset$, wherein the parameter zi is the activation and quantization value, the parameter x is the convolution result, the parameter Bias is the selected first activation and quantization parameter, the parameter Scale is the selected second activation and quantization parameter, and the parameter Offset is the selected third activation and quantization parameter.

14. The neural-network post-processing apparatus according to claim 13, wherein the neural-network post-processing apparatus further comprises a precision transformation unit, and the precision transformation unit is configured to perform precision transformation on a value of the expression (x-Bias), to enable a data type of the value of the expression (x-Bias) to be the same as a data type of the parameter Scale.

15. The neural-network post-processing apparatus according to claim 13 or 14, wherein the neural-network post-processing apparatus further comprises a first saturation operation unit, and the first saturation operation unit is configured to perform a saturation operation on a value of the expression (x-Bias)*Scale.

16. The neural-network post-processing apparatus according to claim 15, wherein the first saturation operation unit is further configured to perform precision transformation on the value of the expression (x-Bias)*Scale, to enable a data type of the value of the expression (x-Bias)* Scale to be the same as a data type of the parameter Offset.

17. The neural-network post-processing apparatus according to any one of claims 13 to 16, wherein the neural-network post-processing apparatus further comprises a second saturation operation unit, and the second saturation operation unit is configured to perform a saturation operation on a value of the parameter zi.

18. A computer-readable storage medium, wherein the computer-readable storage medium stores computer instructions; and when the computer instructions are run on an electronic device, the electronic device is enabled to perform the neural-network post-processing method according to any one of claims 1 to 8.

19. An electronic device, wherein the electronic device comprises a processor and a memory, the memory is configured to store instructions, and the processor is configured to invoke the instructions in the memory, to enable the electronic device to perform the neural-network post-processing method according to any one of claims 1 to 8.

20. A chip, coupled to a memory in an electronic device, wherein the chip is configured to control the electronic device to perform the neural-network post-processing method according to any one of claims 1 to 8.

100

Processing chip

| 101 | 102 | 103 |
| --- | --- | --- |
| Convolution module | Activation and quantization module | Pooling module |

FIG. 1

110

dist

lb    lb        lb        lb        lb        lb      rb
(rb)       (rb)       (rb)       (rb)       (rb)

N=4

FIG. 2

102

Activation and quantization module

1021

Bias

LUT

$id_x$    Scale            Offset

d

x

$-$    $>>d$

Precision transformation → X → Saturation operation → + → Saturation operation → $z_1$

FIG. 3

In response to a received convolution result of a neural network layer, look, based on channel information of the neural network layer, up an address entry that matches the neural network layer — 401

Select, from the matched address entry, an activation and quantization parameter corresponding to the convolution result — 402

Obtain, through calculation based on the convolution result and the selected activation and quantization parameter, an activation and quantization value corresponding to the convolution result — 403

FIG. 4

200

**Neural-network post-processing apparatus**

Lookup unit — 301

Calculation unit — 302

Precision
transformation unit — 303

First saturation
operation unit — 304

Second saturation
operation unit — 305

FIG. 5

10

Electronic device

1003

1001 Processor

1004 Computer program

Memory

1002

FIG. 6

| | **INTERNATIONAL SEARCH REPORT** | International application No. |
|---|---|---|
| | | **PCT/CN2021/109848** |

**A. CLASSIFICATION OF SUBJECT MATTER**

G06N 3/04(2006.01)i; G06N 3/063(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; WOTXT; EPTXT: 神经网络, 层, 后处理, 激活, 量化, 池化, 参数, 查表, 查找表, neural network, layer, aftertreatment, activation, quantize, pooling, parameter, TLU, table look up

**C. DOCUMENTS CONSIDERED TO BE RELEVANT**

| Category* | Citation of document, with indication, where appropriate, of the relevant passages | Relevant to claim No. |
|---|---|---|
| A | CN 109389212 A (NANJING UNIVERSITY) 26 February 2019 (2019-02-26) description, paragraphs [0033]-[0046], and figure 1 | 1-20 |
| A | CN 109146057 A (HANGZHOU XIONGMAI INTEGRATED CIRCUIT TECHNOLOGY CO., LTD.) 04 January 2019 (2019-01-04) entire document | 1-20 |
| A | CN 110610237 A (TP-LINK TECHNOLOGIES CO., LTD.) 24 December 2019 (2019-12-24) entire document | 1-20 |
| A | US 2021216859 A1 (IBM) 15 July 2021 (2021-07-15) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 February 2022** | **08 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/109848**

| Patent document cited in search report | | | Publication date (day/month/year) | Patent family member(s) | | | Publication date (day/month/year) |
|---|---|---|---|---|---|---|---|
| CN | 109389212 | A | 26 February 2019 | None | | | |
| CN | 109146057 | A | 04 January 2019 | CN | 109146057 | B | 08 December 2020 |
| CN | 110610237 | A | 24 December 2019 | None | | | |
| US | 2021216859 | A1 | 15 July 2021 | None | | | |

Form PCT/ISA/210 (patent family annex) (January 2015)